(19) Europäisches Patentamt
European Patent Office
Office européen des brevets

(11) EP 1 465 276 B1

(12) # EUROPÄISCHE PATENTSCHRIFT

(45) Veröffentlichungstag und Bekanntmachung des Hinweises auf die Patenterteilung:
**15.06.2011 Patentblatt 2011/24**

(51) Int Cl.:
***H01M 8/10*** *(2006.01)* ***H01M 8/04*** *(2006.01)*

(21) Anmeldenummer: **04003448.0**

(22) Anmeldetag: **17.02.2004**

(54) **Niedertemperatur-Brennstoffzelle sowie Verfahren zum Betreiben derselben**

Low temperature fuel cell and method for operating the same

Pile à combustible basse température et procédé de fonctionnement associé

(84) Benannte Vertragsstaaten:
**AT BE BG CH CY CZ DE DK EE ES FI FR GB GR HU IE IT LI LU MC NL PT RO SE SI SK TR**

(30) Priorität: **31.03.2003 DE 10314483**

(43) Veröffentlichungstag der Anmeldung:
**06.10.2004 Patentblatt 2004/41**

(73) Patentinhaber: **Forschungszentrum Jülich GmbH
52425 Jülich (DE)**

(72) Erfinder:
- **Bringmann, Jan
76726 Germersheim (DE)**
- **Dohle, Hendrik
52224 Stolberg (DE)**
- **Mergel, Jürgen
52428 Jülich (DE)**
- **Müller, Martin
53115 Bonn (DE)**

(56) Entgegenhaltungen:
**WO-A-03/092107**
**WO-A2-02/27837**
**US-A1- 2003 003 336**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft eine Niedertemperatur-Brennstoffzelle, insbesondere eine Alkohol-Brennstoffzelle, sowie ein vorteilhaftes Verfahren zum Betreiben derselben.

Eine Niedertemperatur-Brennstoffzelle, insbesondere eine Polymer-Elektrolyt-Membran-(PEM-) Brennstoffzelle, besteht aus einer Anode und einer Kathode, die durch eine für Ionen durchlässige Polymer-Membran getrennt ist. Dieser Elektrolyt ist ca. 0,1 mm dick. Die gasdichte Membran, die für Wasserstoff und Sauerstoff weitgehend undurchlässig ist, und auch nicht Elektronen leitend ist, ist in der Regel für Protonen durchlässig.

Die Elektroden weisen eine hohe Porosität und damit eine große Oberfläche auf, die vorteilhaft für die elektrochemischen Umsetzungen zur Verfügung steht. Als Katalysatoren werden meist Platin oder Platinlegierungen verwendet, die als dünne, katalytisch wirkende Schicht auf der Membran angeordnet sind. Über die Verteilerstrukturen werden die Betriebsmittel, Brennstoff und Oxidationsmittel zugeführt und regelmäßig homogen bis an die Membran herangeführt.

Der an der Anode zugeführte Wasserstoff setzt sich mit Hilfe des Katalysators elektrochemisch um. Die dabei freiwerdenden Elektronen gelangen über die Bipolarplatte in die nächste Zelle, während die Protonen durch die Elektrolytmembran zur Kathode diffundieren. Die negativ geladenen Elektrolytionen leiten das Proton weiter, wobei die Ionen selber ortsfest bleiben. An der Kathode rekombinieren der Sauerstoff aus der Luft, die Elektronen aus dem Anodenraum sowie die Protonen aus der Membran und erzeugen unter Wärmeentwicklung Wasser. Die Membran auf der Anodenseite ist regelmäßig feucht zu halten, während auf der Kathodenseite das Produktwasser regelmäßig entfernt werden muss.

Die bei der elektrochemischen Umsetzung freiwerdende Wärme wird regelmäßig aus der Brennstoffzelle, bzw. dem Brennstoffzellenstapel abgeführt und extern beispielsweise in einen Wärmeaustauscher geleitet.

Aus US 2003/003336 A1 ist beispielsweise ein Niedertemperatur-Methanolbrennstoffzellenstapel bekannt, der wenigstens zwei Brennstoffzellen umfassend jeweils eine Membranelektrodeneinheit (MEA) aufweist. Die MEAs sind jeweils zwischen zwei Separatorplatten (Bipolarplatten) angeordnet, die als Verteilerstrukturen für die Betriebsmittel und gleichzeitig als Stromkollektoren dienen. Zudem weist der Brennstoffzellenstapel auch Mittel zur Zuführung der Betriebsmittel zu den Anoden-, bzw. Kathodenverteilerstrukturen auf.

In WO 02/27837 A2 wird ferner eine PEM-Brennstoffzelle sowie ein Verfahren zum Betreiben derselben beschrieben. Bei diesen Brennstoffzellen ist zwischen den Membran-Elektroden-Einheiten und den bipolaren Platten jeweils eine ausreichend elektrisch leitfähige Zwischenschicht eingebracht, die verhindert, dass aus den Membran-Elektroden-Einheiten austretende Phosphorsäure an die bipolare Platten gelangt. Dazu können diese Zwischenschichten mehrere Schichten aus hydrophoben Kohlepapieren enthalten.

## Aufgabe und Lösung

Eine Aufgabe der Erfindung ist es, eine Brennstoffzelle zu schaffen, bei der die erzeugte Wärme direkt zur Vorwärmung eines flüssigen Betriebsmittels genutzt werden kann. Eine weitere Aufgabe der Erfindung ist es, ein Verfahren zum Betreiben einer solchen Brennstoffzelle bereit zu stellen.

Die Aufgaben der Erfindung werden gelöst durch ein Verfahren zum Betreiben einer Brennstoffzelle gemäß Hauptanspruch, sowie durch eine Brennstoffzelle mit der Gesamtheit an Merkmalen gemäß Nebenanspruch. Vorteilhafte Ausgestaltungen der Brennstoffzelle und des Verfahrens finden sich in den jeweils darauf rückbezogenen Ansprüchen.

## Gegenstand der Erfindung

Die der Erfindung zugrunde liegende Idee basiert darauf, die stark exotherme Reaktion an der Kathode einer Brennstoffzelle für die Vorwärmung des Betriebsmittels für die Anode derart zu nutzen, dass der Wärmeübergang von der Kathode zur Anode vorteilhaft direkt innerhalb der Brennstoffzelle erfolgt. Dabei wird die auf der Kathodenseite erzeugte Wärme direkt, beispielsweise über die bipolare Platte, dem Brennstoff im Anodenraum der benachbarten Zelle derart zugeführt, dass während des laufenden Betriebs der Brennstoffzelle der Wärmeübergang zum Verdampfen des Brennstoffs regelmäßig ausreicht.

Dazu weist der erfindungsgemäße Brennstoffzellenstapel wenigstens zwei Brennstoffzellen mit einer Anode, einer Kathode, sowie einer dazwischen angeordneten Elektrolytmembran auf. Die Einzelzellen sind jeweils durch eine bipolare Platte gasdicht voneinander getrennt, jedoch elektrisch leitend miteinander verbunden.

Der erfindungsgemäße Brennstoffzellenstapel weist nun zusätzlich zwischen der Anode und der bipolaren Platte einer Zelle eine Schicht aus porösem Material auf, welche in direktem Kontakt zu der bipolaren Platte steht. Als eine dafür sehr gut geeignete Schicht ist beispielsweise ein Vlies zu nennen, welches vorteilhaft in einem Rahmen angeordnet ist. Der Brennstoffzellenstapel weist zudem Mittel auf, die den Brennstoff in das poröse Material zu leiten vermögen und gegebenenfalls auch Mittel, die ein weiteres Gas in die poröse Schicht zu leiten vermögen. Dazu kann beispielsweise ein das poröse Material umfassender Rahmen eine Zuleitung zur Zuführung des Brennstoffs, sowie

wenigstens eine Zuführung für ein Gas aufweisen, durch die das Betriebsmittel, bzw. das Gas in das poröse Material geleitet werden.

Bei dem erfindungsgemäßen Brennstoffzellenstapel fungiert die bipolare Platte regelmäßig als Wärmeaustauscher, der die an der Kathodenseite entstehende Wärme einer ersten Zelle direkt der Schicht mit dem porösen Material im Anodenraum einer benachbarten Zelle zuführt. Wird dem Rahmen, bzw. dem porösen Material Betriebsmittel, insbesondere Alkohol zugeführt, so reicht die übertragene Wärme regelmäßig aus, um den Brennstoff zu verdampfen. Über eine Verteilerstruktur gelangt der verdampfte Brennstoff anschließend zur Anode, wo die elektrochemische Umsetzung stattfindet. Die Verteilerstruktur kann dabei sowohl eine eigenständige Vorrichtung sein, oder aber auch beispielsweise Teil des Rahmens, welcher das poröse Material beinhaltet.

Neben reinen Alkoholen, insbesondere Methanol als Brennstoff, ist auch eine Betriebsweise mit einem Alkohol-Wassergemisch denkbar. Die exotherme Kathodenreaktion reicht in der Regel aus, um ein Brennstoff mit einem Siedepunkt zwischen 60 und 100 °C vollständig zu verdampfen. Sofern die Brennstoffzelle unter erhöhtem Druck betrieben wird, sind auch höhere Temperaturen möglich. Der Grenzwert wird dabei durch den Siedepunkt von reinem Wasser vorgegeben. Das zur elektrochemischen Umsetzung an der Anode notwendige Wasser wird auf der Kathodenseite erzeugt und gelangt in der Regel durch Rückdiffusion auf die Anodenseite.

Vorteilhaft wird bei hoher Last aufgrund der höheren Abwärme automatisch mehr gasförmiger (verdampfter) Brennstoff erzeugt, so dass die Brennstoffzelle dahingehend selbstregelnd ist.

Ferner kann durch die Zudosierung von Wasser zum Brennstoff die Menge an verdampftem Brennstoff vorteilhaft variiert werden.

Während der Anlaufphase eines Brennstoffzellenstapels wird in der Regel noch nicht genügend Wärme auf der Kathodenseite erzeugt, um den zugeführten Brennstoff vollständig zu verdampfen. In diesem Fall kann vorteilhaft ein Trägergas über eine entsprechende Leitung zugeführt werden, das sich mit Brennstoff anreichert und die Anode versorgt.

Spezieller Beschreibungsteil

Nachfolgend wird der Gegenstand der Erfindung anhand von vier Abbildungen und einem Ausführungsbeispiel näher erläutert, ohne dass der Gegenstand der Erfindung dadurch beschränkt wird.

Die Erfindung basiert auf der Idee einer integrierten dampfförmigen Methanolversorgung einer direkten Methanol-Brennstoffzelle. Dabei wird der Methanoldampf direkt durch die kathodische Reaktionswärme erzeugt. Die Gesamtreaktion

$$CH_3OH + 3/2\ O_2 \rightarrow CO_2 + 2\ H_2O$$

hat eine Reaktionsenthalpie von - 772 kJ/mol. Davon wird nur etwa 20 bis 30 % in elektrische Energie umgesetzt, der Rest fällt in der Regel als Wärme an. Auf die Teilreaktionen an der Anode und der Kathode entfallen dabei die folgenden Enthalpiewerte:

Anode: $130{,}33\ kJ/mol = \Delta_R H$

$$CH_3OH_{(fl.)} + H_2O_{(fl.)} \rightarrow CO_{2(g)} + 6\ H^+_{(aq.)} + 6\ e^- \quad (1)$$

Kathode: $-857{,}52\ kJ/mol = \Delta_R H$

$$6\ H^+_{(aq.)} + 3/2\ O_{2(g)} + 6e^- \rightarrow 3\ H_2O_{(fl.)} \quad (2)$$

Die kathodische Teilreaktion (2) ist also stark exotherm. Reines Methanol hat demgegenüber eine Verdampfungsenthalpie von lediglich 35,27 kJ/mol (65°C). Die kathodisch frei werdende Wärme wird durch eine Wärmeaustauscherplatte direkt auf das Methanol oder eine Methanol-Wassermischung (Siedepunkt zwischen 65 und 100 °C) übertragen. Die Anode wird durch das auf diese Weise verdampfte Methanol mit Brennstoff versorgt. Um die Versorgung weiter zu verbessern, kann auch ein (leichter) Trägergasstrom mit z. B. $CO_2$, $N_2$ oder einem anderen Inertgas aufgeschaltet werden. Bei einer reinen Alkohol-Brennstoffzelle wird das für die Umsetzung an der Anode benötigte Wasser vorteilhaft durch Rückdiffusion des Wassers durch die Membran von der Kathodenseite zur Verfügung gestellt.

Der erfindungsgemäße Brennstoffzellenstapel, bzw. das Verfahren zum Betreiben eines solchen weisen die folgenden Vorteile gegenüber dem Stand der Technik auf:

- Im Gegensatz zur flüssig betriebenen Methanol-Brennstoffzelle/(Wasser-Methanol-Gemisch) wird durch den Dampfeinsatz ein Überfluten der Kathode mit Wasser verhindert. Die anodenseitig gebildeten Protonen wandern durch die Membran zur Kathode und ziehen dabei regelmäßig große Mengen an Wasser mit sich. Diese Überflutung führt regelmäßig zu hohen Leistungseinbußen, da dann nicht mehr genügend Sauerstoff an die Kathode gelangt.
- Durch die interne Methanolverdampfung entfällt eine aufwendige, Energie verbrauchende externe Zudosierung des Brennstoffs.
- Das erfindungsgemäße Brennstoffzellendesign führt zu einer vorteilhaften Kompaktierung der Peripherie.
- Durch den Verdampfungsprozess gelangt nur reines Methanol oder ein Methanol/Wasser-Gemisch an die Anode, da die Methanolbeimengungen in der Regel schwerer verdampfen (deutlich höherer Siedepunkt) als das reine Methanol.

Legende zu den Figuren 1a und 1b:

1 Anode
2 Kathode
3 Rahmen
4 bipolare Platte (= Wärmeaustauscher)
5 Elektrolyt-Membran
6 Verteilerstruktur
7 poröse Schicht

Figur 1a zeigt den schematischen Aufbau einer Brennstoffzelle gemäß dem Stand der Technik. Demgegenüber zeigt die Figur 1b eine erfindungsgemäße Ausführungsform einer Niedertemperatur-Brennstoffzelle mit einer porösen Schicht 5, die an die bipolare Platte 6 angrenzt, die in dieser Ausführung als Wärmeaustauscher fungiert.

In den Figuren 2 und 3 sind weitere Ausführungsbeispiele der erfindungsgemäßen Brennstoffzelle zu sehen.

Im Rahmen der Erfindung sind auch weitere Niedertemperatur-Brennstoffzellen mit umfasst, die mit einem Brennstoff betrieben werden, dessen Siedetemperatur bei Betriebsbedingungen unterhalb der von Wasser liegt. Da die Membran regelmäßig mit Wasser getränkt ist, wird die Temperatur, bei der diese Brennstoffzelle betrieben werden kann, regelmäßig durch den Betriebsdruck und die sich dabei einstellende Siedetemperatur des Wassers nach oben begrenzt. Dementsprechend ist auch ein Brennstoff auszuwählen, dessen Siedetemperatur bei Betriebsbedingungen unterhalb dieser Maximaltemperatur liegt, beispielsweise Methanol, dessen Siedetemperatur bei Normaldruck 65 °C beträgt.

## Patentansprüche

1. Niedertemperatur-Brennstoffzellenstapel mit wenigstens zwei Brennstoffzellen, umfassend jeweils eine Membran-Elektrodeneinheit aus einer Anode (1), einer Kathode (2), sowie einer dazwischen angeordneten Elektrolytmembran (5), wobei zwischen den Brennstoffzellen eine bipolare Platte (4) angeordnet ist, und zwischen der bipolaren Platte (4) und der Anode (1) eine Verteilerstruktur (6) angeordnet ist,
   **dadurch gekennzeichnet,**
   **dass** wenigstens eine zusätzliche poröse Schicht (7), die Mittel zur Zuleitung eines Brennstoffs aufweist, zwischen der bipolaren Platte (4) und der Verteilerstruktur (6) angeordnet ist.

2. Niedertemperatur-Brennstoffzellenstapel nach Anspruch 1, bei der die zusätzliche poröse Schicht in einem Rahmen angeordnet ist.

3. Niedertemperatur-Brennstoffzellenstapel nach Anspruch 1 bis 2, mit einem Vlies als zusätzliche poröse Schicht.

4. Niedertemperatur-Brennstoffzellenstapel nach Anspruch 1 bis 3, bei dem die zusätzliche poröse Schicht ein weiteres Mittel zur Zuleitung eines Gases aufweist.

**5.** Niedertemperatur-Brennstoffzellenstapel nach Anspruch 1 bis 4, bei der die bipolare Platte als Wärmeaustauscher ausgestaltet ist.

**6.** Verfahren zum Betreiben eines Niedertemperatur-Brennstoffzellenstapels mit wenigstens zwei Brennstoffzellen, umfassend jeweils eine Membran-Elektrodeneinheit aus einer Anode (1), einer Kathode (2), sowie einer dazwischen angeordneten Elektrolytmembran (5), umfassend eine zwischen den beiden Membran-Elektrodeneinheiten angeordnete bipolare Platte (4), umfassend eine zwischen der bipolaren Platte (4) und der Anode (1) der zweiten Brennstoffzelle angeordnete Verteilerstruktur (6), und umfassend eine zwischen der bipolaren Platte (4) und der Verteilerstruktur (6) der Anode zusätzlich angeordnete poröse Schicht (7),
mit den Schritten

- Brennstoff wird in die zusätzliche poröse Schicht (7) der zweiten Brennstoffzelle eingeleitet,
- die auf der Kathodenseite der ersten Brennstoffzelle erzeugte Wärme wird über die bipolare Platte (4) direkt der zusätzlichen porösen Schicht (7) zugeführt,
- die übertragene Wärme verdampft den Brennstoff,
- der verdampfte Brennstoff gelangt über die Verteilerstruktur (6) zur Anode (1).

**7.** Verfahren nach Anspruch 6, bei dem der Wärmetransport von der ersten zur zweiten Brennstoffzelle über eine als Wärmeaustauscher ausgestaltete bipolare Platte erfolgt.

**8.** Verfahren nach einem der Ansprüche 6 bis 7, bei dem ein Vlies als zusätzliche poröse Schicht (7) eingesetzt wird.

**9.** Verfahren nach einem der Ansprüche 6 bis 8, bei dem der Anteil an verdampftem Brennstoff durch Zumischung von Wasser zum Brennstoff variiert wird.

**10.** Verfahren nach einem der Ansprüche 6 bis 9, bei dem dem Brennstoff in der porösen Schicht (7) zusätzlich ein Trägergas beigemischt wird.

## Claims

**1.** Low temperature fuel cell stack having at least two fuel cells, each comprising a membrane electrode unit made from an anode (1), a cathode (2) and an electrolyte membrane (5) arranged therebetween, wherein a bipolar plate (4) is arranged between the fuel cells and a distributor structure (6) is arranged between the bipolar plate (4) and the anode (1),
**characterised in that**
at least one additional porous layer (7) which comprises means for feeding in a fuel is arranged between the bipolar plate (4) and the distributor structure (6).

**2.** Low temperature fuel cell stack according to claim 1, wherein the additional porous layer is arranged in a frame.

**3.** Low temperature fuel cell stack according to claim 1 to 2, comprising a non-woven fabric as the additional porous layer.

**4.** Low temperature fuel cell stack according to claim 1 to 3, wherein the additional porous layer has a further means for feeding in a gas.

**5.** Low temperature fuel cell stack according to claim 1 to 4, wherein the bipolar plate is configured as a heat exchanger.

**6.** Method for operating a low temperature fuel cell stack which has at least two fuel cells, each comprising a membrane electrode unit made from an anode (1), a cathode (2) and an electrolyte membrane (5) arranged therebetween, and comprising a bipolar plate (4) arranged between the two membrane electrolyte units, and comprising a distributor structure (6) arranged between the bipolar plate (4) and the anode (1) of the second fuel cell, and comprising a porous layer (7) which is additionally arranged between the bipolar plate (4) and the distributor structure (6) of the anode,
comprising the steps

- fuel is introduced into the additional porous layer (7) of the second fuel cell,
- the heat generated on the cathode side of the first fuel cell is fed via the bipolar plate (4) directly to the additional

porous layer (7),
- the heat transported evaporates the fuel,
- the evaporated fuel passes via the distributor structure (6) to the anode (1).

**7.** Method according to claim 6, wherein the heat transport takes place from the first to the second fuel cell via a bipolar plate configured as a heat exchanger.

**8.** Method according to one of the claims 6 to 7, wherein a non-woven fabric is used as the additional porous layer (7).

**9.** Method according to one of the claims 6 to 8, wherein the proportion of evaporated fuel is varied by mixing water into the fuel.

**10.** Method according to one of the claims 6 to 9, wherein a carrier gas is additionally mixed into the fuel in the porous layer (7).

## Revendications

**1.** Pile à combustible basse température avec au moins deux cellules à combustible, comprenant chacune une unité d'électrode à membrane composée d'une anode (1), une cathode (2) ainsi qu'une membrane électrolytique (5) intercalée entre celles-ci, une plaque bipolaire (4) étant disposée entre les piles à combustible, et une structure de répartition (6) étant disposée entre la plaque bipolaire (4) et l'anode (1),
**caractérisée**
**en ce qu'**au moins une couche poreuse (7) supplémentaire comportant des moyens de conduction d'un combustible est disposée entre la plaque bipolaire (4) et la structure de répartition (6).

**2.** Pile à combustible basse température selon la revendication 1, où la couche poreuse supplémentaire est disposée dans un cadre.

**3.** Pile à combustible basse température selon les revendications 1 et 2, comportant un textile non tissé comme couche poreuse supplémentaire.

**4.** Pile à combustible basse température selon les revendications 1 à 3, où la couche poreuse supplémentaire comporte un autre moyen de conduction d'un gaz.

**5.** Pile à combustible basse température selon les revendications 1 à 4, où la plaque bipolaire est réalisée comme échangeur de chaleur.

**6.** Procédé de fonctionnement d'une pile à combustible basse température avec au moins deux cellules à combustible, comprenant chacune une unité d'électrode à membrane composée d'une anode (1), une cathode (2) ainsi qu'une membrane électrolytique (5) intercalée entre celles-ci, comprenant une plaque bipolaire (4) disposée entre les piles à combustible, comprenant une structure de répartition (6) disposée entre la plaque bipolaire (4) et l'anode (1) de la deuxième cellule à combustible, et comprenant une couche poreuse (7) supplémentaire disposée entre la plaque bipolaire (4) et la structure de répartition (6) de l'anode,
ledit procédé présentant les étapes suivantes :

- le combustible est introduit dans la couche poreuse (7) supplémentaire de la deuxième cellule à combustible,
- la chaleur générée côté cathode de la première cellule à combustible est directement conduite vers la couche poreuse (7) supplémentaire par l'intermédiaire de la plaque bipolaire (4),
- la chaleur transmise vaporise le combustible,
- le combustible vaporisé parvient à l'anode (1) par l'intermédiaire de la structure de répartition (6).

**7.** Procédé selon la revendication 6, où le transport de chaleur de la première à la deuxième cellule à combustible est effectué par l'intermédiaire d'une plaque bipolaire réalisée comme échangeur de chaleur.

**8.** Procédé selon l'une des revendications 6 et 7, où un textile non tissé est utilisé comme couche poreuse (7) supplémentaire.

**9.** Procédé selon l'une des revendications 6 à 8, où la proportion de combustible vaporisé varie par mélange d'eau au combustible.

**10.** Procédé selon l'une des revendications 6 à 9, où un gaz vecteur est en outre mélangé au combustible dans la couche poreuse (7).

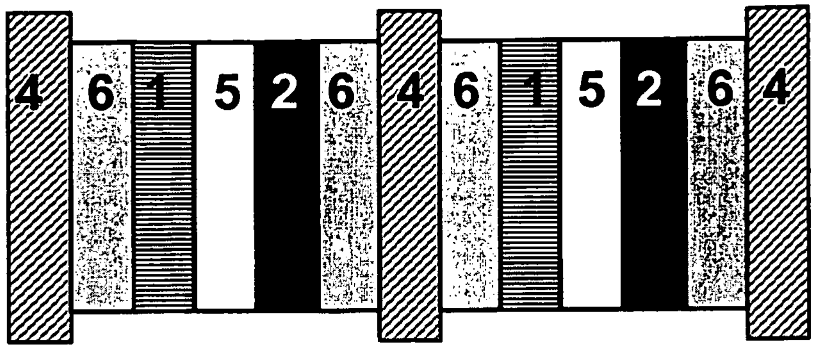


Figur 1a

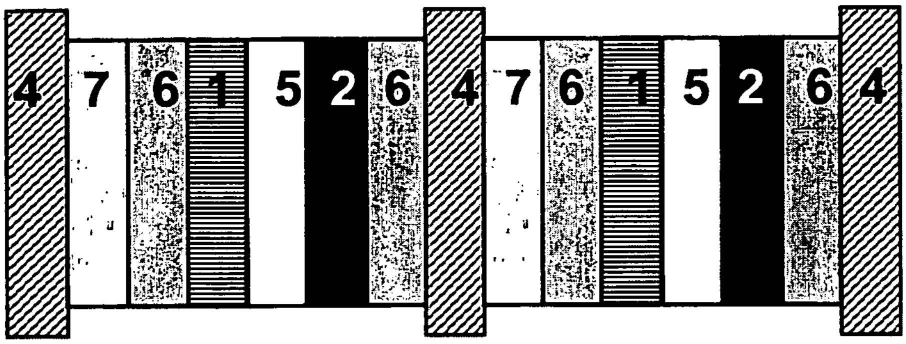


Figur 1b

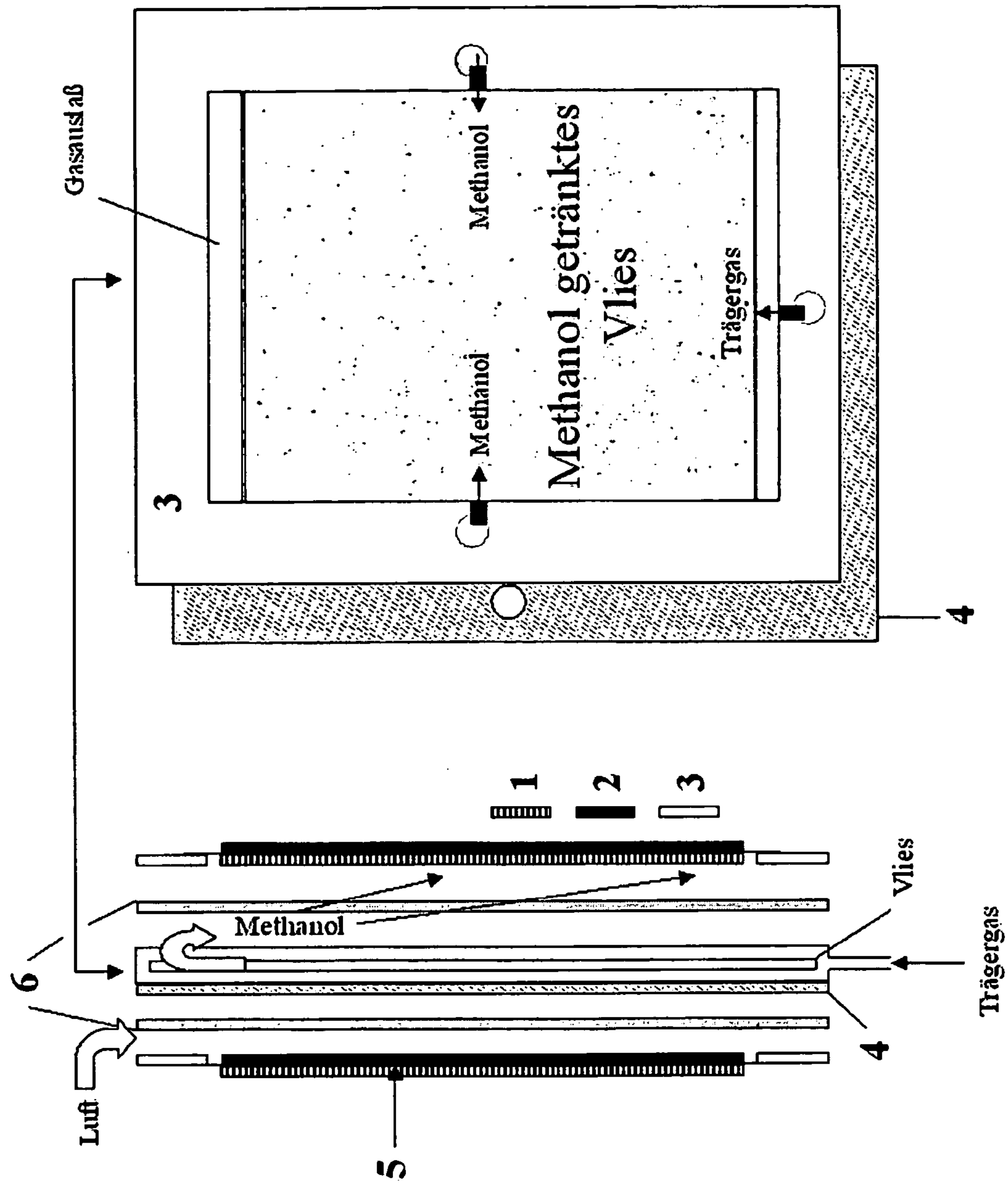
Gasauslaß
3
Methanol
Methanol
Methanol getränktes Vlies
Trägergas
4
1
2
3
6
Methanol
Vlies
Trägergas
Luft
4
5

Figur 2

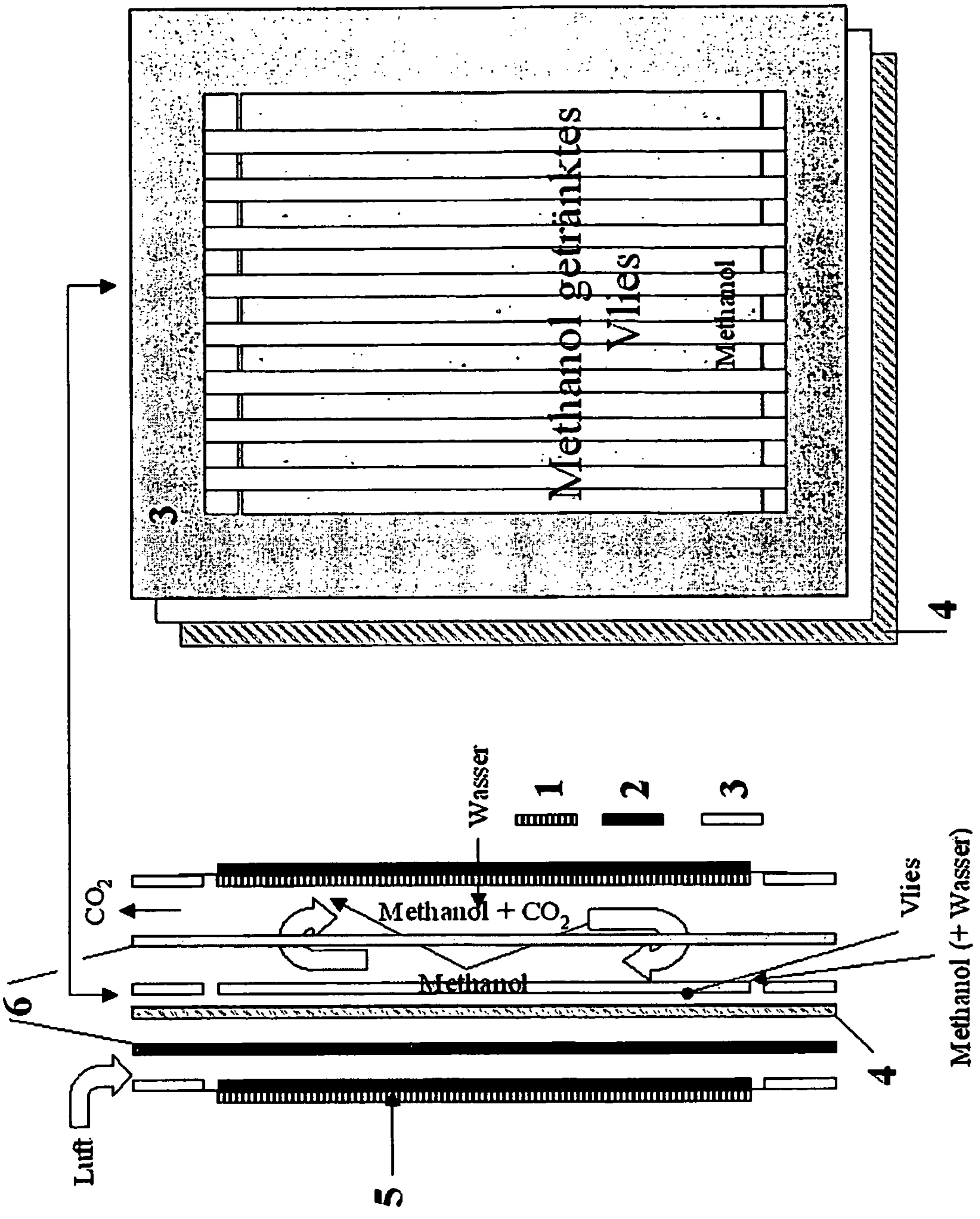

Methanol getränktes Vlies
Methanol
3
4
Wasser
1
2
3
CO2
Methanol + CO2
Methanol
Vlies
Methanol (+ Wasser)
6
4
Luft
5


Figur 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2003003336 A1
- WO 0227837 A2